# EUROPEAN PATENT SPECIFICATION

(11) **EP 2 482 014 B1**
(45) Date of publication and mention of the grant of the patent: **19.07.2017**
(21) Application number: 12152902.8
(22) Date of filing: 27.01.2012
(51) Int. Cl.: F25B 49/02, F25B 47/02, F25B 13/00

(54) **Refrigeration cycle apparatus and hydronic heater using the refrigeration cycle apparatus**
Kältekreislaufvorrichtung und hydronisches Heizgerät, das die Kältekreislaufvorrichtung verwendet
Appareil à cycle de réfrigération et chauffage hydronique utilisant ledit appareil

(30) Priority: 27.01.2011 JP 2011014957
(43) Date of publication of application: 01.08.2012
(73) Proprietor: Panasonic Corporation, Kadoma-shi Osaka 571-8501 (JP)
(72) Inventor: Moriwaki, Shunji, Chuo-ku, OSAKA 540-6207 (JP); Aoyama, Shigeo, Chuo-ku, OSAKA 540-6207 (JP); Kusaka, Michiyoshi, Chuo-ku, OSAKA 540-6207 (JP)
(74) Representative: Eisenführ Speiser

(56) References cited:
- EP-A2- 1 647 783
- JP-A- 2008 082 601
- US-B1- 6 474 087

## Description

### [Technical Field]

The present invention relates to a refrigeration cycle apparatus and a hydronic heater using the refrigeration cycle apparatus.

### [Background Technique]

In a conventional refrigeration cycle apparatus and a conventional hydronic heater of this kind, a supercooling heat exchanger is provided at a location downstream of a radiator of a refrigerant circuit, an expanded refrigerant is made to flow into the supercooling heat exchanger, thereby supercooling the refrigerant which flows out from the radiator (see patent document 1 for example).

Fig. 5 shows the conventional refrigeration cycle apparatus described in patent document 1.

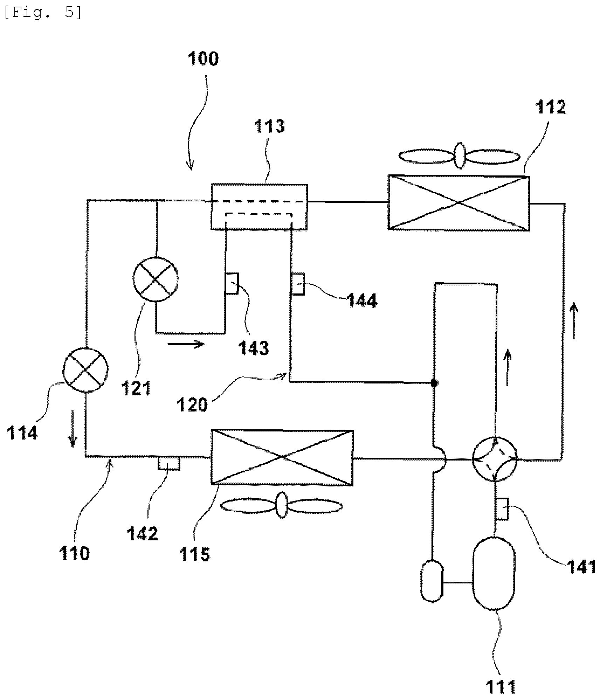

As shown in Fig. 5, a refrigeration cycle apparatus 100 includes a refrigerant circuit 110 through which a refrigerant is circulated, and a bypass passage 120. The refrigerant circuit 110 includes a compressor 111, a radiator 112, a supercooling heat exchanger 113, a main expansion valve 114 and an evaporator 115 which are annularly connected to one another through pipes.

The bypass passage 120 branches off from the refrigerant circuit 110 between the supercooling heat exchanger 113 and the main expansion valve 114, and is connected to the refrigerant circuit 110 between the evaporator 115 and the compressor 111 through the supercooling heat exchanger 113. The bypass passage 120 is provided with a bypass expansion valve 121 at a location upstream of the supercooling heat exchanger 113.

The refrigeration cycle apparatus 100 includes a temperature sensor 141 which detects a temperature (compressor discharge pipe temperature) Td of a refrigerant discharged from the compressor 111, a temperature sensor 142 which detects a temperature (evaporator inlet temperature) Te of a refrigerant flowing into the evaporator 115, a temperature sensor 143 which detects a temperature (bypass-side inlet temperature) Tbi of a refrigerant flowing into the supercooling heat exchanger 113 in the bypass passage 120, a temperature sensor 144 which detects a temperature (bypass-side outlet temperature) Tbo of a refrigerant flowing out from the supercooling heat exchanger 113 in the bypass passage 120, a main expansion valve control unit which controls the main expansion valve 114 such that the discharge pipe temperature Td detected by the temperature sensor 141 becomes equal to a target temperature Td (target) of the discharge pipe of the compressor which is set from the evaporator inlet temperature Te detected by the temperature sensor 142, and a bypass expansion valve control unit which controls the bypass expansion valve 121 such that a difference (Tbo-Tbi) between the bypass-side outlet temperature Tbo and the bypass-side inlet temperature Tbi in the supercooling heat exchanger 113 becomes equal to a predetermined target value.

### [Prior Art Document]

### [Patent Document]

[Patent Document 1] Japanese Patent Application Laid-open No.H10-68553

### [Summary of the Invention]

### [Problem to be Solved by the Invention]

According to the conventional configuration, however, since the main expansion means controls the discharge temperature by a conventionally known general controlling method (e.g., PI control), it is necessary to always control a state of a refrigerant at a bypass outlet such that the state becomes equal to an overheated state which has no influence on the correlation between a pressure-reducing amount of the main expansion means and a discharge temperature variation direction.

Hence, control can not be performed such that the refrigerant state at the bypass outlet becomes equal to a moist state. Therefore, an operation efficiency enhancing effect caused by a bypassing operation can not be exerted to the maximum extent possible. Further, in order to avoid a case where the discharge temperature abnormally rises due to the bypassing operation when a temperature is extremely low, e.g., when an outside air temperature is -20°C, it is necessary to lower the pressure-reducing amount of the main expansion means and to rise an evaporation temperature, and there is a problem that the efficiency is poor and sufficient heating ability can not be secured.

Even if the refrigerant state at the bypass outlet is brought into the moist state, since the correlation between a pressure-reducing amount of the main expansion means and the discharge temperature variation direction is changed due to influence of the bypass-side moist refrigerant, it is difficult to control such that the discharge temperature becomes equal to the target temperature by the conventional general control method, and there is a problem that it is difficult to control such that the discharge temperature becomes equal to the target temperature and in this case also, an operation state of poor efficiency is maintained. Document JP-A-2008 082601 discloses an apparatus according to the preamble of claim 1.

The present invention has been accomplished to solve the conventional problems, and it is an object of the invention to provide a refrigeration cycle apparatus and a hydronic heater having excellent efficiency even when an outside air temperature is low, and capable of securing sufficient heating ability by controlling such that a refrigerant circuit state becomes appropriate state.

### [Means for Solving the Problems]

To solve the conventional problems, the present invention provides a refrigeration cycle apparatus comprising a refrigerant circuit in which a compressor, a radiator, a supercooling heat exchanger, main expansion means and an evaporator are annularly connected to one another in this order, a bypass passage which branches off from the refrigerant circuit between the radiator and the main expansion means, and which is connected to the refrigerant circuit between the evaporator and the compressor or is connected to a compression chamber of the compressor through the supercooling heat exchanger, bypass expansion means provided in the bypass passage at a location upstream of the supercooling heat exchanger, a first temperature sensor which detects a temperature of a refrigerant discharged from the compressor, and a control device which operates the main expansion means such that the temperature detected by the first temperature sensor becomes equal to a predetermined target temperature, characterized in that the control device operates the bypass expansion means such that a refrigerant flowing through the bypass passage is brought into a saturated state at an outlet of the supercooling heat exchanger, and when the temperature detected by the first temperature sensor is higher than the predetermined target temperature, the control device operates the main expansion means in its opening degree-closing direction.

According to this, control is performed such that the bypass outlet refrigerant is brought into the saturated state, and when the discharge temperature is higher than the target temperature, the main expansion means is operated in its opening degree-closing direction. Hence, a flow rate of a moist refrigerant on the bypass side is increased and thus, enthalpy of a refrigerant sucked into the compressor is lowered, the discharge temperature is lowered and it is possible to bring the discharge temperature close to the target temperature.

Further, the refrigeration cycle apparatus of the invention is characterized in that when a temperature detected by the first temperature sensor is lower then the predetermined target temperature, the control device operates the main expansion means in its opening degree-opening direction.

According to this, control is performed such that the bypass outlet refrigerant is brought into the saturated state, and when the discharge temperature is lower than the target temperature, the main expansion means is operated in its opening degree-opening direction. Hence, the flow rate of the moist refrigerant on the bypass side is reduced, the enthalpy of a refrigerant sucked into the compressor is increased, the discharge temperature rises, and the discharge temperature can be brought close to the target temperature.

### [Effect of the Invention]

According to the present invention, it is possible to provide a refrigeration cycle apparatus and a hydronic heater having excellent efficiency even when an outside air temperature is low, and capable of securing sufficient heating ability by controlling such that a refrigerant circuit state becomes appropriate state.

### [Brief Description of the Drawings]

Fig. 1 is a schematic block diagram of a refrigeration cycle apparatus according to an embodiment of the present invention;
Fig. 2 is a Mollier chart when the refrigeration cycle apparatus is operating;
Fig. 3 is a block diagram showing a control device of the refrigeration cycle apparatus in terms of function realizing means;
Fig. 4 is a flowchart of operation control of the refrigeration cycle apparatus; and
Fig. 5 is a schematic block diagram of a conventional refrigeration cycle apparatus.

### [Explanation of Symbols]

- 1A: refrigeration cycle apparatus
- 2: refrigerant circuit
- 3: bypass passage
- 4: control device
- 21: compressor
- 22: radiator
- 23: supercooling heat exchanger
- 24: main expansion valve (main expansion means)
- 25: evaporator
- 31: bypass expansion valve (bypass expansion means)
- 51: pressure sensor
- 61: first temperature sensor

### [Mode for Carrying Out the Invention]

A first aspect of the present invention provides a refrigeration cycle apparatus comprising a refrigerant circuit in which a compressor, a radiator, a supercooling heat exchanger, main expansion means and an evaporator are annularly connected to one another in this order, a bypass passage which branches off from the refrigerant circuit between the radiator and the main expansion means, and which is connected to the refrigerant circuit between the evaporator and the compressor or is connected to a compression chamber of the compressor through the supercooling heat exchanger, bypass expansion means provided in the bypass passage at a location upstream of the supercooling heat exchanger, a first temperature sensor which detects a temperature of a refrigerant discharged from the compressor, and a control device which operates the main expansion means such that the temperature detected by the first temperature sensor becomes equal to a predetermined target temperature, characterized in that the control device operates the bypass expansion means such that a refrigerant flowing through the bypass passage is brought into a saturated state at an outlet of the supercooling heat exchanger, and when the temperature detected by the first temperature sensor is higher than the predetermined target temperature, the control device operates the main expansion means in its opening degree-closing direction.

According to this, control is performed such that the bypass outlet refrigerant is brought into the saturated state, and when the discharge temperature is higher than the target temperature, the main expansion means is operated in its opening degree-closing direction. Hence, a flow rate of a moist refrigerant on the bypass side is increased and thus, enthalpy of a refrigerant sucked into the compressor is lowered, the discharge temperature is lowered and it is possible to bring the discharge temperature close to the target temperature.

Therefore, the discharge temperature is appropriately controlled while maintaining the refrigerant state at the outlet of the bypass passage in the saturated state. Hence, it is possible to maximize the enthalpy difference increasing effect in the evaporator caused by heat exchange between the mainstream refrigerant and the bypassing refrigerant in the supercooling heat exchanger, and to maximize the pressure loss reducing effect of the low pressure-side refrigerant path caused by bypass of the refrigerant. It is possible to obtain higher operating efficiency and sufficient heating ability. It is possible to maintain efficient heating operation while suppressing the abnormal discharge temperature rise even when a temperature is extremely low, e.g., when an outside air temperature is -20°C,

According to a second aspect of the invention, in the first aspect, when the temperature detected by the first temperature sensor is lower than the predetermined target temperature, the control device operates the main expansion means in its opening degree-opening direction.

According to this, control is performed such that a bypass outlet refrigerant is brought into a saturated state, and when a discharge temperature is higher than the target temperature, the main expansion means is operated in its opening degree-opening direction. Hence, a flow rate of a moist refrigerant on the bypass side is increased and thus, enthalpy of a refrigerant sucked into the compressor rises, the discharge temperature rises and it is possible to bring the discharge temperature close to the target temperature.

Therefore, in addition to the effect of the first aspect, it is possible to prevent the compressor from being damaged by moist compression, and the reliability of the compressor is enhanced.

According to a third aspect, in the first or second aspect, the control device operates the main expansion means with an opening degree determined based on a variation amount of the temperature detected by the first temperature sensor at predetermined time.

According to this, even when the discharge temperature is abruptly varied due to variation in the operation state such as variation in load, since the opening degree is corrected in accordance with the variation amount, the control stability is enhanced. Therefore, the effect of the invention can be obtained more swiftly, and comfort can also be enhanced.

A fourth aspect of the invention is a hydronic heater including the refrigeration cycle apparatus according to any one of the first to third aspects. According to this, the refrigeration cycle apparatus of the invention can also be applied to a hydronic heater not only when the radiator is a heat exchanger which exchanges heat between a refrigerant and air but also when the radiator is a heat exchanger which exchanges heat between a refrigerant and water.

An embodiment of the present invention will be explained with reference to the drawings. The invention is not limited to the embodiment.

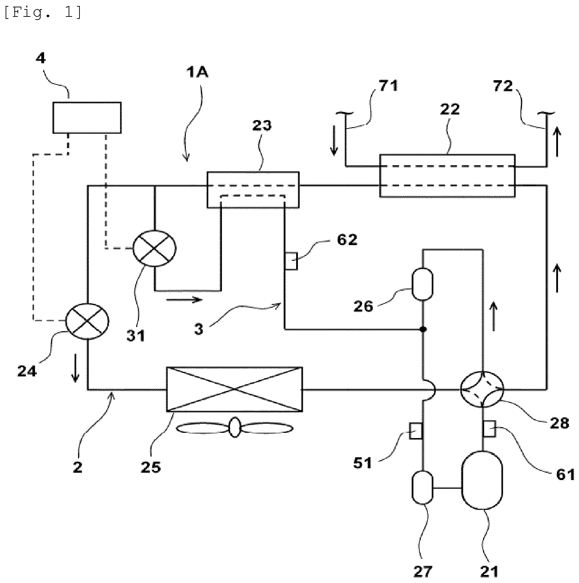

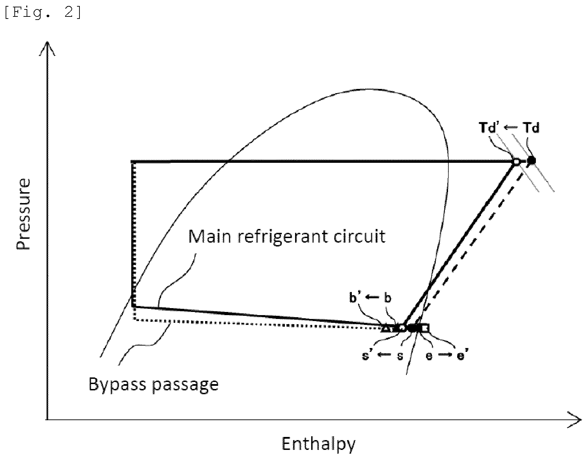

Fig. 1 is a schematic block diagram of a refrigeration cycle apparatus according to the embodiment of the invention. Fig. 2 is a Mollier chart when the refrigeration cycle apparatus is operating.

In Fig. 1, the refrigeration cycle apparatus 1A includes a refrigerant circuit 2 through which a refrigerant is circulated, a bypass passage 3, and a control device 4. As a refrigerant, it is possible to use a zeotropic refrigerant mixture such as R407C, a pseudo-azeotropic refrigerant mixture such as R410A or a single refrigerant.

The refrigerant circuit 2 includes a compressor 21, a radiator 22, a supercooling heat exchanger 23, a main expansion valve (main expansion means) 24 and an evaporator 25, and these constituent members are annularly connected to one another through pipes. In this embodiment, a sub-accumulator 26 and a main accumulator 27 which separate gas and liquid from each other are provided between the evaporator 25 and the compressor 21. The refrigerant circuit 2 is provided with a four-way valve 28 which switches between a normal operation and a defrosting operation.

In the embodiment, the refrigeration cycle apparatus 1A configures heating means of a hydronic heater which utilizes hot water produced by the heating means for heating a room, and the radiator 22 is a heat exchanger which exchanges heat between a refrigerant and water to heat the water.

More specifically, a supply pipe 71 and a collecting pipe 72 are connected to the radiator 22, water is supplied to the radiator 22 through the supply pipe 71, and water (hot water) heated by the radiator 22 is collected through the collecting pipe 72. The hot water collected through the collecting pipe 72 is sent directly to a heater, or sent to the heater through a hot water tank, thereby heating a room.

In the embodiment, the bypass passage 3 branches off from the refrigerant circuit 2 between the supercooling heat exchanger 23 and the main expansion valve 24, and is connected to the refrigerant circuit 2 between the sub-accumulator 26 and the main accumulator 27 between the evaporator 25 and the compressor 21 through the supercooling heat exchanger 23. The bypass passage 3 is provided with a bypass expansion valve (bypass expansion means) 31 at a location upstream of the supercooling heat exchanger 23.

In a normal operation, a refrigerant discharged from the compressor 21 is sent to the radiator 22 through the four-way valve 28. In a defrosting operation, a refrigerant discharged from the compressor 21 is sent to the evaporator 25 through the four-way valve 28. In Fig. 1, arrows show a flowing direction of a refrigerant at the time of the normal operation. A state variation in a refrigerant at the time of the normal operation will be explained.

A high-pressure refrigerant discharged from the compressor 21 flows into the radiator 22, and radiates heat to water which passes through the radiator 22. The high-pressure refrigerant which flows out from the radiator 22 flows into the supercooling heat exchanger 23, and the refrigerant is supercooled by a low-pressure refrigerant which is decompressed by the bypass expansion valve 31. The high-pressure refrigerant which flows out from the supercooling heat exchanger 23 is distributed to the main expansion valve 24 and the bypass expansion valve 31.

The high-pressure refrigerant distributed to the main expansion valve 24 is decompressed by the main expansion valve 24 and expanded and then, the refrigerant flows into the evaporator 25. The low-pressure refrigerant which flows into the evaporator 25 absorbs heat from air in the evaporator 25.

The high-pressure refrigerant distributed to the bypass expansion valve 31 is decompressed by the bypass expansion valve 31 and expanded and then, the refrigerant flows into the supercooling heat exchanger 23. The low-pressure refrigerant which flows into the supercooling heat exchanger 23 is heated by the high-pressure refrigerant which flows out from the radiator 22. Thereafter, the low-pressure refrigerant which flows out from the supercooling heat exchanger 23 merges with the low-pressure refrigerant which flows out from the evaporator 25, and these refrigerants are again sucked into the compressor 21.

The configuration of the refrigeration cycle apparatus 1A of the embodiment is for avoiding a case where pressure of a refrigerant sucked into the compressor 21 is reduced when an outside air temperature is low, a refrigerant circulation amount is reduced and according to this, heating ability of the radiator 22 is deteriorated.

To realize this, it is important that an enthalpy difference in the evaporator 25 is increased by supercooling, a refrigerant is made to bypass through the bypass passage 3 to suppress an amount of a gas-phase refrigerant which has a small heat-absorbing effect and which flows through a low-pressure side refrigerant circuit of the refrigerant circuit 2, thereby reducing a pressure loss in the low-pressure side refrigerant circuit of the refrigerant circuit 2. Here, the low-pressure side refrigerant circuit is a refrigerant circuit 2 extending from the main expansion valve 24 to the compressor 21.

If a pressure loss in the low-pressure side refrigerant circuit of the refrigerant circuit 2 is reduced, pressure of a refrigerant sucked into the compressor 21 rises and specific volume is reduced correspondingly. Therefore, the refrigerant circulation amount is increased. If the enthalpy difference in the evaporator 25 is increased, it is possible to secure an endotherm amount in the evaporator 25 even if a mass flow rate of a refrigerant which passes through the evaporator 25 is reduced by the bypassing operation. That is, if a supercooling degree of a refrigerant and a bypass amount are maximized, it is possible to obtain the maximum heating ability enhancing effect of the radiator 22 and the maximum coefficient of performance enhancing effect of the refrigeration cycle apparatus 1A.

Although it will be described later in detail in the embodiment, control is performed such that when a refrigerant at an outlet of the bypass passage 3 is in a saturated state and a temperature of a refrigerant discharged from the compressor 21 is higher than a preset predetermined target temperature, the main expansion valve 24 is closed by a predetermined opening degree, and when the temperature of the refrigerant discharged from the compressor 21 is lower than the predetermined target temperature, the main expansion valve 24 is opened by a predetermined opening degree. According to this, when the main expansion valve 24 is operated in its opening degree-closing direction, a flow rate of a refrigerant on the side of the evaporator 25 is reduced, a refrigerant which flows out from the evaporator 25 has such a state where enthalpy is increased from a point e to a point e' in Fig. 2, a flow rate of a refrigerant on the side of the bypass passage 3 is increased, and enthalpy is reduced from a point b to a point b' in Fig. 2.

However, it can be said that enthalpy of a refrigerant which flows out from the evaporator 25 is not largely varied in terms of deterioration in heat transfer caused by reduction in flow rate of a refrigerant and heat exchange in a gas-phase state. That is, a state of a refrigerant sucked into the compressor 21 which is a flow of a mixture of a refrigerant which flows out from the evaporator 25 and a refrigerant which flows out from the bypass passage 3 is predominantly influenced by a refrigerant which flows from the bypass passage 3 in which a circulation amount is increased and the enthalpy is varied in a reducing direction, and the enthalpy of a refrigerant sucked from the compressor 21 is varied in a reducing direction from a point s to a point s' in Fig. 2, and a temperature of a refrigerant discharged out from the compressor 21 is varied in a reducing direction from Td to Td' in Fig. 2.

On the other hand, when the main expansion valve 24 is operated in its opening degree-opening direction, effect which is opposite from that when the main expansion valve 24 is operated in the opening degree-closing direction is generated, and a temperature of a refrigerant discharged from the compressor 21 rises. Therefore, the temperature of the refrigerant discharged from the compressor 21 is controlled such that the temperature becomes equal to a predetermined target temperature.

Control of the operation will be explained below. The refrigerant circuit 2 includes a pressure sensor 51 which detects pressure (suction pressure) Ps of a refrigerant sucked into the compressor 21, and a first temperature sensor 61 which detects a temperature (discharge temperature) Tdₙ of a refrigerant discharged from the compressor 21. The bypass passage 3 includes a second temperature sensor 62 which detects a temperature (bypass passage outlet temperature) Tbo of a refrigerant flowing out from the supercooling heat exchanger 23.

The control device 4 controls the number of rotations of the compressor 21, the switching operation of the four-way valve 28, and opening degrees of the main expansion valve 24 and the bypass expansion valve 31 based on detection values of the pressure sensor 51, the first temperature sensor 61 and the second temperature sensor 62.

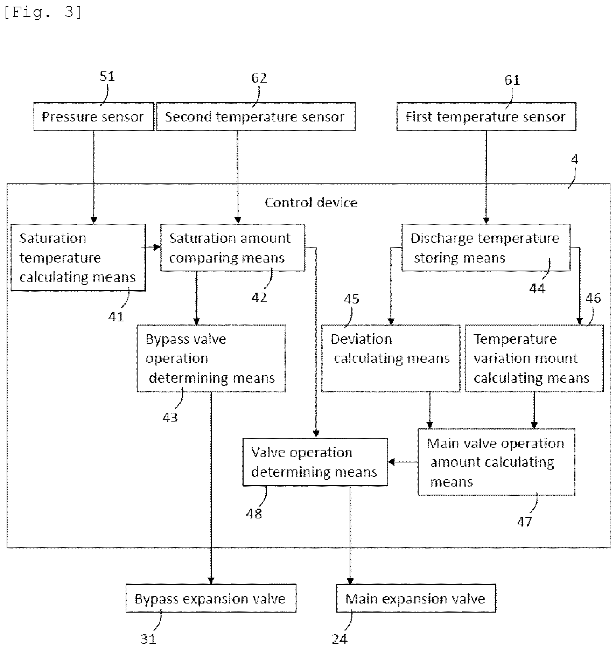

Fig. 3 is a block diagram showing a control device in terms of function realizing means.

The control device 4 includes saturation temperature calculating means 41, saturation amount comparing means 42, bypass valve operation determining means 43, discharge temperature storing means 44, deviation calculating means 45, temperature variation amount calculating means 46, main valve operation amount calculating means 47 and valve operation determining means 48.

The saturation temperature calculating means 41 calculates a saturation temperature Ts under pressure of a refrigerant sucked into the compressor 21 from a suction pressure Ps detected by the pressure sensor 51.

The saturation amount comparing means 42 compared, with each other, the saturation temperature Ts calculated by the saturation temperature calculating means 41 and the bypass passage outlet temperature Tbo detected by the second temperature sensor 62.

The bypass valve operation determining means 43 determines an opening degree of the opening degree of the bypass expansion valve 31 such that the bypass passage outlet temperature Tbo becomes equal to the saturation temperature Ts based on a result of the comparison carried out by the saturation amount comparing means 42, and the bypass valve operation determining means 43 outputs an operation amount Op determined for the bypass expansion valve 31.

The discharge temperature storing means 44 stores a discharge temperature detected by the first temperature sensor 61, and stores at least two discharge temperatures having a predetermined time interval (last time discharge temperature Tdₙ₋₁ and current discharge temperature Tdₙ).

The deviation calculating means 45 calculates the deviation D (Tdₙ-Tdt) between the discharge temperature Tdₙ and a target discharge temperature Tdt. The target discharge temperature Tdt is previously stored.

The temperature variation amount calculating means 46 calculates a temperature variation amount V (Tdₙ-Tdₙ₋₁) from the last time discharge temperature Tdₙ₋₁.

The main valve operation amount calculating means 47 calculates an operation amount Op (D+V) of the main expansion valve 24 from the deviation D calculated by the deviation calculating means 45 and from a temperature variation amount V calculated by the temperature variation amount calculating means 46.

The valve operation determining means 48 determines an opening degree of the main expansion valve 24 by the operation amount Op calculated by the main valve operation amount calculating means 47 and a result of comparison of the saturation amount comparing means 42, and the valve operation determining means 48 outputs the determined operation amount Op to the main expansion valve 24.

In the embodiment, the control device 4 controls the bypass expansion valve 31 such that the bypass passage outlet temperature Tbo detected by the second temperature sensor 62 at the time of the normal operation becomes equal to the saturation temperature Ts calculated based on a suction pressure Ps detected by the pressure sensor 51.

The control device 4 controls the main expansion valve 24 such that the discharge temperature Tdₙ detected by the first temperature sensor 61 becomes equal to a preset predetermined target discharge temperature Tdt at the time of the normal operation. When the bypass passage outlet temperature Tbo is substantially equal to the saturation temperature Ts and the discharge temperature Tdₙ is higher than the predetermined target discharge temperature Tdt, the control device 4 controls the main expansion valve 24 such that it is closed by the operation amount Op which is determined based on the deviation D.

When the bypass passage outlet temperature Tbo is substantially equal to the saturation temperature Ts and the discharge temperature Tdₙ is lower than the predetermined target discharge temperature Tdt, the control device 4 controls the main expansion valve 24 such that it opens by the operation amount Op determined based on the deviation D. When there is a tendency that variation in the discharge temperature Tdₙ at predetermined time is reducing, the control device 4 controls the main expansion valve 24 such that it opens by the operation amount Op determined based on the variation amount, and when there is a tendency that the variation in the discharge temperature Tdₙ at the predetermined time is rising, the control device 4 controls the main expansion valve 24 such that it closes by the operation amount Op determined based on the variation amount.

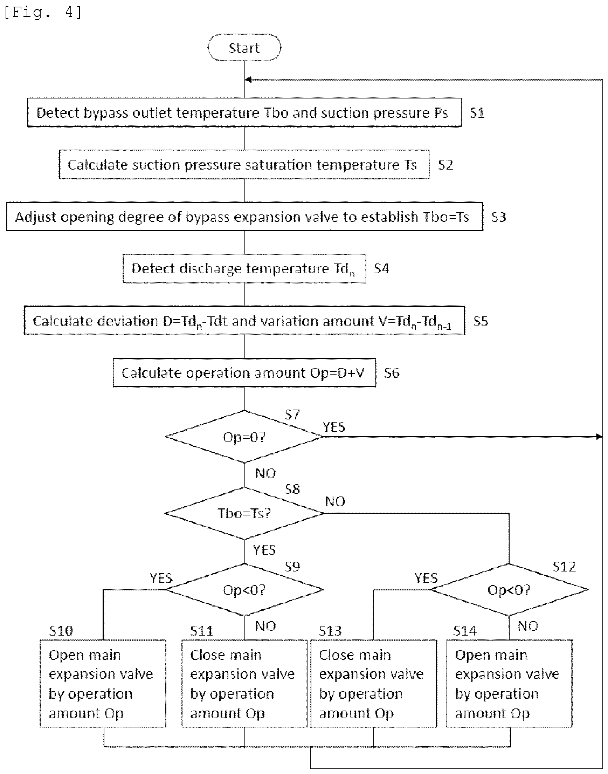

Next, control of the control device 4 at the time of the normal operation will be explained in detail with reference to the flowchart shown in Fig. 4.

First, the control device 4 detects the bypass passage outlet temperature Tbo by means of the second temperature sensor 62, and detects the suction pressure Ps by means of the pressure sensor 51 (step 1).

Then, the control device 4 calculates the saturation temperature Ts under pressure of a refrigerant sucked into the compressor 21 from the suction pressure Ps detected by the pressure sensor 51 (step 2). The saturation temperature Ts is calculated using an equator of physical properties of a refrigerant. The control device 4 adjusts an opening degree of the bypass expansion valve 31 such that the bypass passage outlet temperature Tbo becomes equal to the saturation temperature Ts (step 3).

Thereafter, the control device 4 detects the discharge temperature Tdₙ by means of the first temperature sensor 61 (step 4), the control device 4 calculates a deviation D with respect to the target discharge temperature Tdt by D=Tdₙ-Tdt, and calculates a temperature variation amount V from the last time discharge temperature Tdₙ₋₁ by V=Tdₙ-Tdₙ₋₁ (step 5). Then, the control device 4 calculates the operation amount Op of the current main expansion valve 24 by Op=D+V (step 6).

Here, the control device 4 determines whether the operation amount Op is 0 (step 7). If the operation amount Op is 0 (YES in step 7), since it is conceived that it is unnecessary to operate the main expansion valve 24, the procedure is returned to step 1.

If the operation amount Op is other than 0 (NO in step 7) on the other hand, it is necessary to determine an opening/closing direction of the main expansion valve 24. First, it is determined whether the bypass passage outlet temperature Tbo is equal to the saturation temperature Ts (step 8). If the bypass passage outlet temperature Tbo is equal to the saturation temperature Ts (YES in step 8), a state of the refrigerant at the bypass passage outlet is in a saturated gas state or a gas/liquid two-phase state, and it is found that if a bypass flow rate is increased (if flow rate on the side of the main expansion valve 24 is reduced), the discharge temperature Tdₙ is reduced, and if the bypass flow rate is reduced (if flow rate on the side of the main expansion valve 24 is increased), the discharge temperature Tdₙ rises.

Then, the control device 4 determines whether a sign of the operation amount Op calculated in steps 5 and 6 is negative (step 9). If the sign of the operation amount Op is negative (YES in step 9), since it is conceived that it is necessary to rise the discharge temperature Tdₙ, the main expansion valve 24 is opened by the operation amount Op (step 10), and the procedure is returned to step 1. If the sign of the operation amount Op is positive on the other hand (NO in step 9), since it is conceived that it is necessary to lower the discharge temperature Tdₙ, the main expansion valve 24 is closed by the operation amount Op (step 11), and the procedure is returned to step 1.

If the bypass passage outlet temperature Tbo is not equal to the saturation temperature Ts (NO in step 8), the state of the refrigerant at the bypass passage outlet is an overheated gas state, and it is found that if the bypass flow rate is increased (if the flow rate on the side of the main expansion valve 24 is reduced), the discharge temperature Tdₙ rises, and if the bypass flow rate is reduced (if the flow rate on the side of the main expansion valve 24 is increased), the discharge temperature Tdₙ is lowered.

Then, the control device 4 determines whether the sign of the operation amount Op calculated in steps 5 and 6 is negative (step 12). If the sign of the operation amount Op is negative (YES in step 12), since it is conceived that it is necessary to rise the discharge temperature Tdₙ, the main expansion valve 24 is closed by the operation amount Op (step 13), and the procedure is returned to step 1. If the sign of the operation amount Op is positive on the other hand (NO in step 12), since it is conceived that it is necessary to lower the discharge temperature Tdₙ, the main expansion valve 24 is opened by the operation amount Op (step 14), and the procedure is returned to step 1.

As described above, the embodiment includes the first temperature sensor 61 which detects a temperature of a refrigerant discharged from the compressor 21 in the refrigerant circuit 2, the pressure sensor 51 which detects pressure of a refrigerant sucked into the compressor 21, the second temperature sensor 62 which detects a temperature of a refrigerant flowing out from the supercooling heat exchanger 23 in the bypass passage 3, and the control device 4. The control device 4 controls the bypass expansion valve 31 such that the bypass passage outlet temperature Tbo detected by the second temperature sensor 62 becomes equal to the saturation temperature Ts calculated based on the suction pressure Ps detected by the pressure sensor 51. The control device 4 controls the main expansion valve 24 such that the discharge temperature Tdₙ detected by the first temperature sensor 61 becomes equal to the predetermined target discharge temperature Tdt.

When the bypass passage outlet temperature Tbo is substantially equal to the saturation temperature Ts and the discharge temperature Tdₙ is higher than the predetermined target discharge temperature Tdt, the control device 4 controls the main expansion valve 24 such that the it closes by the operation amount Op which is determined based on the deviation D.

When the bypass passage outlet temperature Tbo is substantially equal to the saturation temperature Ts and the discharge temperature Tdₙ is lower than the predetermined target discharge temperature Tdt, the control device 4 controls the main expansion valve 24 such that it is opened by the operation amount Op which is determined based on the deviation D. When there is a tendency that the variation in the discharge temperature Tdₙ at the predetermined time is lowering, the control device 4 controls the main expansion valve 24 such that it is opened by the operation amount Op which is determined based on the variation amount, and when there is a tendency that the variation in the discharge temperature Tdₙ is rising, the control device 4 controls the main expansion valve 24 such that it is closed by the operation amount Op which is determined based on the variation amount.

According to this, when control is performed such that a refrigerant at the outlet of the bypass passage 3 is brought into the saturated state and the discharge temperature is higher than the predetermined target temperature, the main expansion valve 24 is operated in the opening degree-closing direction. Therefore, a flow rate of a moist refrigerant on the bypass side can be increased, the enthalpy of a refrigerant sucked into the compressor 21 can be lowered and the discharge temperature can be lowered.

When control is performed such that a refrigerant at the outlet of the bypass passage 3 is brought into the saturated state and the discharge temperature is lower than the predetermined target temperature, the main expansion valve 24 is operated in the opening degree-opening direction. Therefore, a flow rate of a moist refrigerant on the bypass side can be reduced, the enthalpy of a refrigerant sucked into the compressor 21 can rise and the discharge temperature can rise.

Therefore, the discharge temperature is appropriately controlled while maintaining the refrigerant state at the outlet of the bypass passage 3 in the saturated state. Hence, it is possible to maximize the enthalpy difference increasing effect in the evaporator 25 caused by heat exchange between the mainstream refrigerant and the bypassing refrigerant in the supercooling heat exchanger 23, and to maximize the pressure loss reducing effect of the low pressure-side refrigerant path caused by bypass of the refrigerant. It is possible to obtain higher operating efficiency and sufficient heating ability. It is possible to maintain efficient heating operation while suppressing the abnormal discharge temperature rise even when a temperature is extremely low, e.g., when an outside air temperature is -20°C,

In the embodiment, the control device 4 controls the main expansion valve 24 using an opening degree which is determined based on the variation amount of the discharge temperature detected by the first temperature sensor 61 at predetermined time.

According to this, even when the discharge temperature is abruptly varied due to variation in the operation state such as variation in load, since the opening degree is corrected in accordance with the variation amount, the control stability is enhanced. Therefore, the effect of the invention can be obtained more swiftly, and comfort can also be enhanced.

Although the pressure sensor 51 is provided between the main accumulator 27 and the position of the refrigerant circuit 2 to which the bypass passage 3 is connected in Fig. 1, the pressure sensor 51 may be provided at any position of the refrigerant circuit 2 only if the pressure sensor 51 is provided between the evaporator 25 and the compressor 21. Alternatively, the pressure sensor 51 may be provided at the bypass passage 3 at a location downstream of the supercooling heat exchanger 23.

Although the pressure sensor 51 calculates the saturation temperature Ts in the embodiment, temperatures in the refrigerant circuit 2 and the bypass passage 3 at portions through which low pressure two-phase refrigerants flow may be detected and the detected values may be used as the saturation temperature Ts.

It is not always necessary that the bypass passage 3 branches off from the refrigerant circuit 2 between the supercooling heat exchanger 23 and the main expansion valve 24, and the bypass passage 3 may branch off from the refrigerant circuit 2 between the radiator 22 and the supercooling heat exchanger 23.

It is not always necessary that a connection of the bypass passage 3 is a suction pipe of the compressor 21. In the case f a compressor having an injection mechanism, the connection of the bypass passage 3 may be connected to an injection port.

It is not always necessary that the main expansion valve 24 and the bypass expansion valve 31 of the invention are expansion valves, and they may be expansion devices which collect power from an expanding refrigerant. In this case, the number of rotations of the expansion device may be control by varying a load by means of a power generator connected to the expansion device.

### [Industrial Applicability]

The present invention is especially effective for a hydronic heater which produces hot water by a refrigeration cycle apparatus and utilizes the hot water for heating a room.

## Claims

1. A refrigeration cycle apparatus (1A) comprising a refrigerant circuit (2) in which a compressor (21), a radiator (22), a supercooling heat exchanger (23), main expansion means (24) and an evaporator (25) are annularly connected to one another in this order,
a bypass passage (3) which branches off from the refrigerant circuit between the radiator and the main expansion means, and which is connected to the refrigerant circuit between the evaporator and the compressor or is connected to a compression chamber of the compressor through the supercooling heat exchanger,
bypass expansion means (31) provided in the bypass passage at a location upstream of the supercooling heat exchanger,
a first temperature sensor (61) which detects a temperature of a refrigerant discharged from the compressor, and
a control device (4) which operates the main expansion means such that the temperature detected by the first temperature sensor becomes equal to a predetermined target temperature,
**characterized in that**
the control device operates the bypass expansion means such that a refrigerant flowing through the bypass passage is brought into a saturated state at an outlet of the supercooling heat exchanger, and when the temperature detected by the first temperature sensor is higher than the predetermined target temperature, the control device operates the main expansion means in its opening degree-closing direction.

2. The refrigeration cycle apparatus according to claim 1, **characterized in that** when the temperature detected by the first temperature sensor is lower than the predetermined target temperature, the control device operates the main expansion means in its opening degree-opening direction.

3. The refrigeration cycle apparatus according to claim 1 or 2, **characterized in that** the control device operates the main expansion means with an opening degree determined based on a variation amount of the temperature detected by the first temperature sensor at predetermined time.

4. A hydronic heater including the refrigeration cycle apparatus according to any one of claims 1 to 3.

## Patentansprüche

1. Kühlkreisvorrichtung (1A), umfassend
einen Kühlmittelkreislauf (2), in dem ein Kompressor (21), ein Radiator (22), ein Unterkühlung-Wärmetauscher (23), ein Haupt-Expansionsmittel (24) und ein Verdampfer (25) ringförmig in dieser Reihenfolge miteinander verbunden sind,
eine Bypasspassage (3), die vom Kühlmittelkreislauf zwischen dem Radiator und dem Haupt-Expansionsmittel abzweigt, und die mit dem Kühlmittelkreislauf zwischen dem Verdampfer und dem Kompressor verbunden ist oder mit einer Kompressionskammer des Kompressors über den Unterkühlung-Wärmetauscher verbunden ist,
ein Bypass-Expansionsmittel (31), vorgesehen in der Bypasspassage an einer Stelle stromaufwärts von dem Unterkühlung-Wärmetauscher,
einen ersten Temperaturfühler (61), der eine Temperatur eines von dem Kompressor abgegebenen Kühlmittels erfasst, und
eine Steuervorrichtung (4), die das Haupt-Expansionsmittel so betreibt, dass sich die durch den ersten Temperaturfühler erfasste Temperatur einer vorgegebenen Solltemperatur angleicht,
**dadurch gekennzeichnet, dass**
die Steuervorrichtung das Bypass-Expansionsmittel so betreibt, dass ein durch die Bypasspassage strömendes Kühlmittel an einem Auslass des Unterkühlung-Wärmetauschers in einen gesättigten Zustand gebracht wird, und wenn die durch den ersten Temperaturfühler erfasste Temperatur höher ist als die vorgegebene Solltemperatur, die Steuervorrichtung das Haupt-Expansionsmittel in seine Öffnungsgrad-Schließrichtung betreibt.

2. Kühlkreisvorrichtung nach Anspruch 1, **dadurch gekennzeichnet, dass**, wenn die durch den ersten Temperaturfühler erfasste Temperatur niedriger ist als die vorgegebene Solltemperatur, die Steuervorrichtung das Haupt-Expansionsmittel in seine Öffnungsgrad-Öffnungsrichtung betreibt.

3. Kühlkreisvorrichtung nach Anspruch 1 oder 2, **dadurch gekennzeichnet, dass** die Steuervorrichtung das Haupt-Expansionsmittel mit einem Öffnungsgrad betreibt, der auf Grundlage eines Schwankungsbetrags der durch den ersten Temperaturfühler erfassten Temperatur zu einer vorgegebenen Zeit bestimmt wird.

4. Hydronikheizung, enthaltend die Kühlkreisvorrichtung nach einem der Ansprüche 1 bis 3.

## Revendications

1. Appareil à cycle de réfrigération (1A) comprenant
un circuit de réfrigérant (2) dans lequel un compresseur (21), un radiateur (22), un échangeur de chaleur à super-refroidissement (23), un moyen de détente principal (24) et un évaporateur (25) sont connectés de manière annulaire l'un à l'autre dans cet ordre,
un passage de dérivation (3) qui dérive du circuit de réfrigérant entre le radiateur et le moyen de détente principal et qui est connecté au circuit de réfrigérant entre l'évaporateur et le compresseur ou est connecté à une chambre de compression du compresseur via l'échangeur de chaleur à super-refroidissement,
un moyen de détente de dérivation (31) prévu dans le passage de dérivation à une position en amont de l'échangeur de chaleur à super-refroidissement,
un premier capteur de température (61) qui détecte une température d'un réfrigérant évacué du compresseur, et
un dispositif de commande (4) qui commande le moyen de détente principal de sorte que la température détectée par le premier capteur de température devienne égale à une température cible prédéterminée,
**caractérisé en ce que**
le dispositif de commande commande le moyen de détente de dérivation de sorte qu'un réfrigérant circulant à travers le passage de dérivation soit mis dans un état saturé à un orifice de sortie de l'échangeur de chaleur à super-refroidissement et, lorsque la température détectée par le premier capteur de température est supérieure à la température cible prédéterminée, le dispositif de commande commande le moyen de détente principal dans sa direction d'ouverture-fermeture partielle.

2. Appareil à cycle de réfrigération selon la revendication 1, **caractérisé en ce que**, lorsque la température détectée par le premier capteur de température est inférieure à la température cible prédéterminée, le dispositif de commande commande le moyen de détente principal dans sa direction d'ouverture-ouverture partielle.

3. Appareil à cycle de réfrigération selon la revendication 1 ou 2, **caractérisé en ce que** le dispositif de commande commande le moyen de détente principal avec un degré d'ouverture déterminé sur la base d'une quantité de variation de la température détectée par le premier capteur de température à un moment prédéterminé.

4. Radiateur hydronique comprenant l'appareil à cycle de réfrigération selon l'une des revendications 1 à 3.
